# EUROPEAN PATENT APPLICATION

(11) **EP 0 656 445 A1**
(43) Date of publication of application: **07.06.1995**
(21) Application number: 94917689.5
(22) Date of filing: 13.06.1994
(51) Int. Cl.: E01F 9/01

(54) **FOLDABLE AND TRANSPORTABLE BEACON FOR TRAFFIC SIGNALLING FOR EMERGENCY USE ON PUBLIC ROADWAYS AND OTHER USES**

(30) Priority: 13.06.1993 AR 32514193; 13.05.1994 AR 32819894
(71) Applicant: SEGOBIA, Claro Omar Eucaristico, Martinez (AR); ALVAREZ DE SEGOBIA, Alvarina, Martinez (AR)
(72) Inventor: SEGOBIA, Claro Omar Eucaristico, Martinez (AR); ALVAREZ DE SEGOBIA, Alvarina, Martinez (AR)
(74) Representative: Pearce, Anthony Richmond
(86) International application number: ES9400061
(87) International publication number: WO9429527

(57) **Abstract**

Foldable and transportable beacon, for traffic signalling in emergency cases on roadways and other uses of the type comprising a support base (a) from which a main conical or truncated body (b) is erected which, in association with said base (a), has an attractive aspect resulting from a partially or totally reflectant, fluorescent texture or the like. The main conical body (b), which is hollow, is comprised of tubular elements (4 and 6) of different diameters which, when telescopically assembled, are displaceable from an inoperative position wherein they are retracted into each other in at least one cavity (5) of the base (a) which forms its holding box, to another extended position of said main conical body (b), in full high configuration, the main conical body including positioning means for the relative holding between the extended elements (4 and 6).

## Description

### Field of the Invention

The present invention consists of a foldable and portable beacon for road/street marking and warning of emergencies and other uses, the beacon being highly visible and easy to be carried.

### Description of the Prior Art

One of the highest mortality rates, particularly in Argentina, are due to traffic accidents. A relevant percentage of these accidents arise from unproperly parked or stopped vehicles, for instance due to emergency causes, which vehicles are exposed to be crashed by other circulating cars in circumstances of vision defficiencies.

Modern highways causes these situations to turn particularly critical because of the vehicles high speeds, therefore a remarkably warning beaconing, visible from long distances, would be the best way to prevent such accidents.

Unfortunately, while modern car speeds have increased , the warning capacity of beacons have remained the same like the old ones created for slower old vehicles and different traffic conditions.

The above considerations are of course also valid for other transport means such as boats, planes, trains, etc. wherein, in particular circumstances, highly visible beacons and as large as possible portable beacons are necessary.

The above cited aspects are essential for the human life in several emergency situations, susch as tose appearing in small piers and airports, as well as in unfortunate and repeated situation wherein a train is stopped without warning signs, marks or beacons indicating its position.

This kind of warning devices are also important for operations of security forces, emergencies medical corps, firemen, rescue corps, etc.

The size of beaconing devices required for all the above referred cases becomes an obstacle insofar as to the quantity and available room for the easy transportation thereof.

It is due to the above explained reasons that smallest beacones are most comercially required, which beacons have been improved by increasing, by several ways, their reflecting and lighting features.

Anyway, since there is a direct relationship between the size of the beacon and its signing or warning capacity, the capacity of the known devices is restricted.

### Summary of the Invention

The limitations to the known above mentioned devices are overcome by the present invention by providing an ingenious device consisting of a foldable conical body, comprising several telescopically arranged tubular elements, whereby a beacon is defined in its unfolded position, capable of multiplying many times its folding size.

There are some beacons larger than other common ones, such as the triangle-shape beacons, however these beacons fail beacuse of their weakness, their joins are easily broken and therefor disassembled.

The present foldable beacon, unlike the known devices, includes a plurality of position locking means, capable of reciprocal interlocking, arranged in a zone where the tubular elements are adjoining or contiguous, so that a firm assembling of the arrangement is obtained.

Another drawback of the conventional beacons is, due to their extremely ligth structures, that the beacon is easily turned down by wind or by a slight inadvertent touch thereof.

The above problem is solved by the present invention by providing a side cavity in the resting base, whereby a ballast or weight may be introduced into a corresponding inlet opening for giving the beacon a good stability.

In addition to the foregoing, with reference to the room avilable to store the larger beacons during transportation, it must be added that the telescopic assembly of the tubular elements of the present invention, allows the elements to be folded one within the others, within a central cavity of the resting base, and a closing cap is then placed onto for keeping the elements in the folded position. Thus a large beacon is turned into a beacon the size of which is reduced to the size of its supporting base.

Furthermore, the need of reducing volumes caused important complementary elements to be eliminated. Unlike the foregoing, the present invention provides an structure the conformation of which allows additional elements, such as light sources, to be incorporated without affecting the main features of the beacon. This is achieved by a compartment extending within a non used space in the central cavity.

From the foregoing it is expected that the present device will be broadly accepted and it will be an element which will decidely improve the traffic security and will be usefull either for general users as well as for several aid and security public organisms.

### Brief Description of the Drawings

The above and other objects, features and advantages of this invention will be better understood when taken in connection with the description and accompanying drawings wherein the invention is illustrated by way of example, wherein:
FIG. 1 is a perspective view of the beacon of the invention, showing the comformation of the beacon.
FIG. 2 is a cross-section, side elevation view of the beacon in no operative position, showing the side cavity (for ballast) and the central cavity (for tubular elements), the cap being illustrated over the central cavity.
FIG. 3 is a partial cross-section, bottom view of the beacon, showing the bottom wall and the cavity cap wherein the light source is located.
FIG. 4 is perspective view of the beacon in operative position, showing the conical main body unfolded or extended.
FIG. 5 is cross-section, side elevation view of the truncated-cone tubular elements, showing the projecting and embeding locking means.
FIG. 6 is perspective view of the beacon in inoperative position, showing its compartment for the light source.

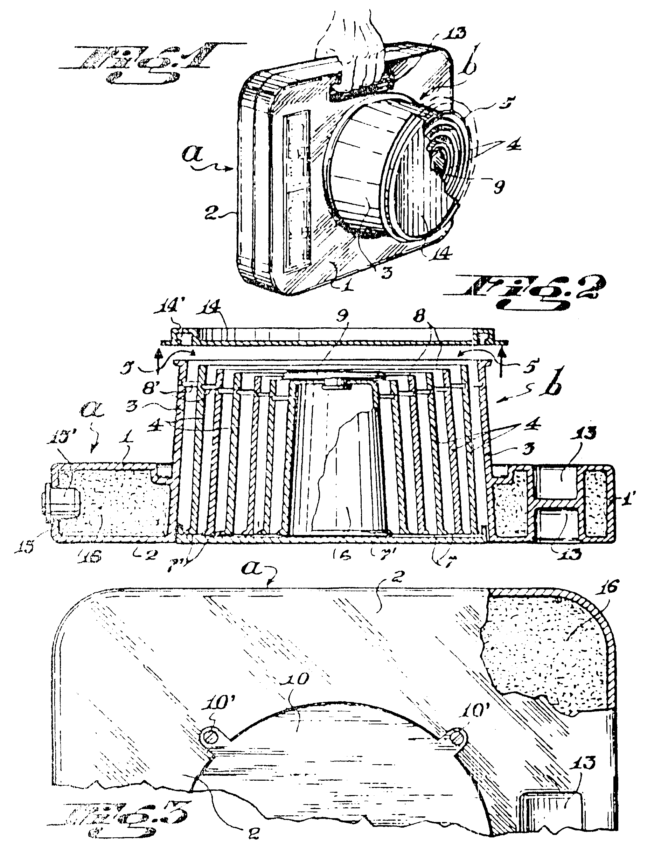

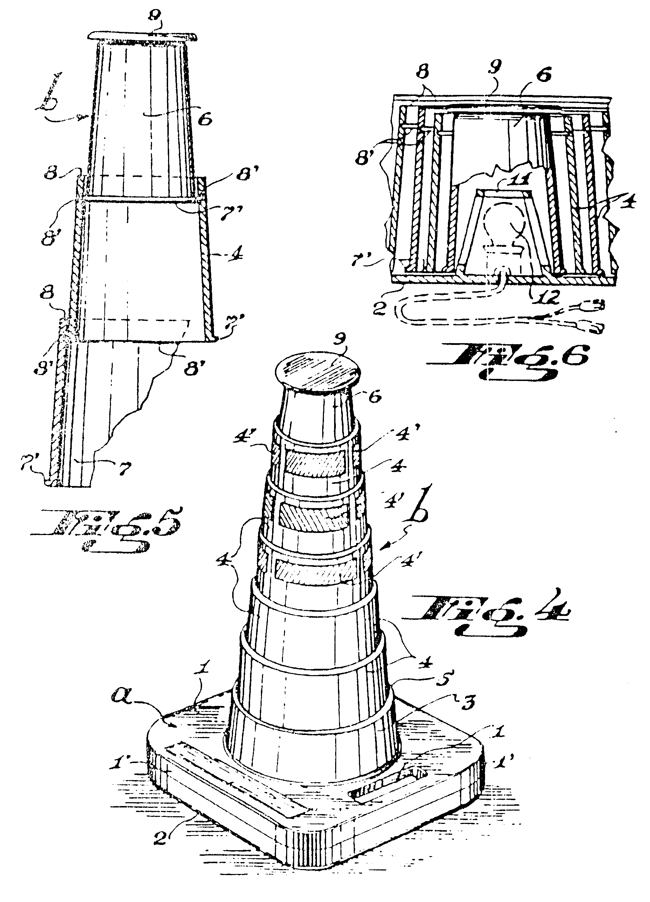

### Detailed Description of the Invention

In the several drawings the same numeral references are used to indicate equivalent or same parts, while letter references have been used to indicate the groups of several elements.

### List of Main References

- a: resting or supporting base
- b: main conical body
- 1: top wall of (a)
- 1': side walls of (a)
- 2: supporting bottom wall of (a)
- 3: annular socle
- 4: truncated-cone tubular elements
- 4': reflecting adhesives
- 5: central cavity of the base
- 6: upper truncated-cone tubular element
- 7: lower adjoining zone
- 7': projecting position-locking means
- 8: upper adjoining zone
- 8': embeding position-locking means
- 9: grasping means of (6)
- 10: retaining cap for (12)
- 10': screws of (10)
- 11: compartment for (12)
- 12: light source
- 13: handle of (a)
- 14: closing cap of cavity (5)
- 15: ballast receiving opening
- 15': cap for opening (15)
- 16: side cavity for ballast.

The main object of the present invention is a foldable and portable beacon, for street/road signing, for emergencies in public road and other uses, of the kind comprising a supporting base (a) from which a main conical, or truncated-cone shaped, body (b) is upwardly extended, the body and the base have toghether an attention-attracting configuration, such as that of a partiallly or totally reflecting, fluorescent and the like texture, characterized in that the main conical body (b) is hollow and consists of tubular elemnts (4) and (6) having different diameters, the tubular elements are telescopically arranged and are movable between an inoperative position wherein the elements are folded or unextended one within the others, in at least one cavity (5) of base (a) defining an elements-containing box, and another operative position of the main conical body (b), unfolded along the entire height thereof, which body includes position-locking means (7') and (8') between the unfolded elements (4) and (6).

Therefore, the present invention consists of a foldable and portable beacon, for road signing, for emergencies in public road and other applications, having a lenght that in inoperative position is reduced by telescopically folding several of its components.

The beacon is a device comprising a supporting base (a) from which a main conical, or truncated-cone shaped, body (b) upwardly extends.

Both elemnts (a) and (b) have an attention-attracting aspect such as from a reflecting, fluorescent or the like texture (4').

In a preferred embodiment, main conical body (b) is a hollow body consisting of truncated-cone shaped tibular elements (4) and (6), these elements having the same conicalness but different diameters so that they are telescopically arranged.

Particularly, tubular truncated-conical elemnts (4) are pieces with diameters decreasing from their virtual larger base towards their virtual smaller base. Furthermore, adjacent to said virtual larger base, the outer surface of the tubular element (4) defines a lower adjoining zone (7) with a projecting position-locking means (7') annularly extended around the same.

At the opposed end of said tubular element (4), in the zone adjacent to the virtual smaller base and on the inner surface, the upper adjoining zone (8) is located, with an embeding position-locking means (8') annularly extended around the same.

Although the truncated-conical tubular element (6) has, in turn, its lower adjoining zone like the other tubular elements (4), its upper end ends in a grasp means (9) for folding and unfolding the main conical body (b).

Regarding the supporting base (a), the same consists of a hollow flat box formed by a bottom supporting wall (2) and a top wall (1), both walls being joined by side walls (1').

Furthermore, an annular socle (3) upwardly extends from the central zone of top wall (1), the socle encircling the access to a central cavity (5) of supporting base (a). Said central cavity (5) forms the containing box for tubular elements (4) and (6) of the main conical body (b), when folded in inoperative position.

Also in supporting base (a) and extended around central cavity (5), there is a side cavity (16) encircled by the inner surfaces of said central cavity (5), by annular socle (3), by top wall (1), by side walls (1') and by supporting bottom wall (2).

This side cavity (16) includes a ballast receiving opening (15) having a cap (15') and located on one of the side walls (1').

Supporting bottom wall (2) of the base (a) defines, in turn, at the inside of the central cavity (5), a compartment (11) for a light source (12), with a retaining cap (10) for said source (12). Said compartment (11) has a diameter smaller than the diameter of the upper tubular element (6), so that compartment (11) do not bar the folding of the main conical body (b) to the inoperative position.

In addition to the foregoing, supporting base (a) has an elongated grooved which, adjacent to one of the side walls (1'), defines a handle (13).

The assembly is completed by a closing cap (14) of the central cavity (5), the cap closing on the edges of annular socle (3), the main conical body (b) being folded in inoperative position.

The operation of the assembly is as follows:
With the main conical body (b) being in the folded inoperative position, the closing cap (14) is removed and upper tubular element (6) is pulled out from grasp means (9), whereby said main conical body (b) is unfolded or extended.

When the unfolding is carried out, the lower adjoining zone (7) of each tubular element (4) will move forward up to the upper adjoining zone (8) of the contiguous element (4) in the telescopic arrangement. This extended movement will follow until the respective embeding and projecting position-locking means (8') and (7') interlock to each other, whereby the main conical body (b) will be firmly retained in the extended or unfolded operative position.

To help in keeping the assembly stand up with stability, cap (15') may be removed and some kind of ballast or weight may be introduced through receiving opening (15) until side cavity (16) is full.

Finally, main conical body (9) may be folded into central cavity (5) of base (a) by exerting pressure downwardly against grasp means (9) of upper tubular element (6), whereby projecting locking means (7') are dislodged from embeding locking means (8') of tubular elements (4) and (6).

Once the assembly has been unfolded to its inoperative position closing cap (14) is placed to close cavity (5) so that the beacon is ready to be carried by handle (13) of supporting base (a).

While a preferred embodiment of the present invention has been illustrated and described, it will be obvious to those skilled in the art that various changes and modifications may be made therein without departing from the scope of the invention as defined in the appended claims.

## Claims

1. A foldable and portable beacon, for road signing, for emergencies in public road and other applications, the beacon comprising a flat annular hollow body, the inner wall of which upwardly extends from the top wall of the annular hollow body, to form an integral truncated-cone shaped segment for housing a plurality of like height and diameter decreasing truncated-conical segments, the segments having at their bases a projection cooperating with a recess at their upper edges for receiving said projection, a base being provided to close the bottom part of said annular body, said base having an inner compartment having a dimension smaller than the truncated-conical segment of smallest diameter.

2. Foldable and portable beacon according to claim 1, wherein the hollow annular body has a ballast receiving opening.

3. Foldable and portable beacon according to claim 1 or 2, wherein light means is housed within the compartment.

4. Foldable and portable beacon according to any of claims 1 to 3, wherein the smaller diameter inner compartment has a cap at an upper edge, having a diameter slightly larger than the diameter of the upper edge, but slightly smaller than the diameter of the upper edge of the contiguous outer segment.

5. Foldable and portable beacon according to any of claims 1 to 4, wherein the truncated conical segments have a height slightly decreasing towards the center of the annular body.

6. Foldable and portable beacon according to any of claims 1 to 5, wherein the integral truncated conical segment has at an upper edge thereof a socket means for an upper cap thereof.
